# EUROPÄISCHE PATENTANMELDUNG

(11) **EP 2 765 685 A1**
(43) Veröffentlichungstag der Anmeldung: **13.08.2014**
(21) Anmeldenummer: 13154666.5
(22) Anmeldetag: 08.02.2013
(51) Int. Cl.: H02K 3/40

(54) **Außenglimmschutz mit zuverlässiger Anbindung an die Hauptisolierung und an das Blechpaket**

(71) Anmelder: Siemens Aktiengesellschaft, 80333 München (DE)
(72) Erfinder: Olbrich, Irene, 13581 Berlin (DE); Risse, Joachim, 13627 Berlin (DE)

(57) **Zusammenfassung**

Die Erfindung betrifft ein Aktivteil einer elektrischen Maschine mit einem Blechpaket (4) mit eingebrachten Nuten (5), einem in einer der Nuten (5) angeordneten elektrischen Leiter (1), einer Isolierschicht (2), welche den elektrischen Leiter (1) zumindest teilweise umgibt und von dem Blechpaket (4) elektrisch isoliert, einer Schutzschicht (3), welche die Isolierschicht (2) zumindest teilweise umgibt, wobei die Schutzschicht (3) mit der Isolierschicht (2) und mit dem Blechpaket (4) mittels eines Imprägnierharzes verbunden ist. Um einen verbesserten Außenglimmschutz zur Verfügung zu stellen, der unabhängig von der Beschaffenheit der Hauptisolierung eine gute Anbindung an die Hauptisolierung und an das Blechpaket (5) sicherstellt, wird vorgeschlagen, dass die Schutzschicht (3) einen Beschleuniger für das Imprägnierharz enthält. Weiterhin betrifft die Erfindung eine elektrische Maschine mit einem derartigen Aktivteil.

## Beschreibung

Die Erfindung betrifft ein Aktivteil einer elektrischen Maschine mit einem Blechpaket mit eingebrachten Nuten, einem in einer der Nuten angeordneten elektrischen Leiter, einer Isolierschicht, welche den elektrischen Leiter zumindest teilweise umgibt und von dem Blechpaket elektrisch isoliert, einer Schutzschicht, welche die Isolierschicht zumindest teilweise umgibt, wobei die Schutzschicht mit der Isolierschicht und mit dem Blechpaket mittels eines Imprägnierharzes verbunden ist. Weiterhin betrifft die Erfindung eine elektrische Maschine mit einem derartigen Aktivteil.

Im Umfeld von Hochspannungsmaschinen sind die Isolierschicht auch als Hauptisolierung und die Schutzschicht auch als Außenglimmschutz bekannt.

Ein derartiges Aktivteil bzw. eine derartige Maschine kommt beispielsweise bei Hochspannungsgeneratoren und Hochspannungsmotoren zum Einsatz. Zum definierten Potenzialausgleich auf der nutseitigen Isolierung von Hochspannungs-Statorwicklungen wird üblicherweise ein so genannter Außenglimmschutz verwendet. Dieser Außenglimmschutz wird bei mittels eines Imprägnierprozesses hergestellten Statorwicklungen, z.B. VPI("Vacuum Pressure Impregnation")-Statorwicklungen, als niederohmige Bandbewicklung auf die Isolierung gewickelt. Dabei ist eine gute Anbindung des Außenglimmschutzbandes sowohl an die Hauptisolierung des Wicklungselementes als auch an das Blechpaket sicherzustellen.

Zur Sicherstellung einer guten Anbindung des Außenglimmschutzbandes an die Hauptisolierung ist es derzeit erforderlich, dass die äußere Lage der Isolierung aus einem Glimmerband, insbesondere einem Feinglimmerglasgewebeband, besteht. Dadurch wird sichergestellt, dass beim Imprägnierprozess, z.B. beim Vakuum-Druck-Imprägnier(VPI)-Prozess, aus dem Glimmerband ausreichend Beschleuniger, d.h. ausreichend chemischer Katalysator, zur Verfügung gestellt wird, um das darüberliegende Außenglimmschutzband gut an die Isolierung anzubinden. Dabei bewirkt der Beschleuniger einen besonders wirkungsvollen Aushärtungsprozess des Imprägnierharzes.

Bei einer Mischisolierung aus Feinglimmerglasgewebebändern und Feinglimmerfolienbändern ist eine ausreichende Härtung des Imprägnierharzes zwischen der Folie und dem Außenglimmschutzband nicht sichergestellt und somit eine zweilagige, geschachtelte Bewicklung als oberste Lagenanordnung nicht möglich. Aus diesem Grund müssen bisher bei maschineller Bewicklung die letzten beiden Lagen getrennt in zwei Fahrten gewickelt werden, so dass stets eine Feinglimmerglaslage außen liegt. Des Weiteren ist eine mehrlagige Außenglimmschutzbewicklung nicht möglich, da mangels Beschleuniger das Imprägnierharz zwischen den Außenglimmschutzlagen nicht oder nur unzureichend ausgehärtet. Ferner ist aus den gleichen Gründen eine reine Feinglimmerfolienisolierung ebenso nicht möglich.

Aus der DE 102 27 226 A1 ist ein Aktivteil mit in Nuten eines Blechpakets angeordneten Leitern bekannt, wobei die Leiter eine Isolierung und einen auf der Isolierung angeordneten Außenglimmschutz aufweisen.

Der Erfindung liegt die Aufgabe zugrunde, einen verbesserten Außenglimmschutz zur Verfügung zu stellen, der unabhängig von der Beschaffenheit der Hauptisolierung eine gute Anbindung an die Hauptisolierung und an das Blechpaket sicherstellt.

Diese Aufgabe wird bei einem Aktivteil und bei einer elektrische Maschine der eingangs genannten Art dadurch gelöst, dass die Schutzschicht einen Beschleuniger für das Imprägnierharz enthält.

Beim Imprägnierprozess dringt Imprägnierharz unter anderem in dem Bereich der Schutzschicht ein, insbesondere entlang der Grenzfläche der Schutzschicht zur Isolierschicht und entlang der Grenzfläche der Schutzschicht zum Blechpaket. Da die Schutzschicht einen Beschleuniger enthält, wird das Imprägnierharz mit ausreichend Beschleuniger in Kontakt gebracht, so dass ein gutes Aushärten des Imprägnierharzes im Bereich der Schutzschicht und besonders an den Grenzflächen zum Blechpaket und zur Schutzschicht gewährleistet wird. Dies bewirkt eine besonders zuverlässige Verbindung der Schutzschicht sowohl mit der Isolierschicht als auch mit dem Blechpaket.

Da der Beschleuniger für den Aushärtungsprozess in der Schutzschicht enthalten ist, kann die Isolierschicht ausschließlich hinsichtlich ihrer elektrischen Isolationseigenschaften gewählt werden und diesbezüglich optimiert werden. Bei der Materialauswahl bzw. -komposition der äußeren Isolierschicht muss also nicht mehr berücksichtigt werden, dass die ausgewählten Materialien einen Beschleuniger bzw. eine ausreichende Menge eines Beschleunigers aufnehmen können und während des Imprägnierprozesses insbesondere an die Schutzschicht abgeben können. Dies erlaubt eine Verbesserung der Isolierschicht, durch welche insbesondere bei Hochspannungsanwendungen bedeutende Vorteile erzielt werden können.

Beispielsweise kann die äußere Isolierschicht auch ein folienbasiertes Trägermaterial enthalten oder gänzlich daraus bestehen.

Erfindungsgemäß umgibt die Schutzschicht die Isolierschicht zumindest teilweise, so dass insbesondere vorgesehen sein kann, dass die Schutzschicht die Isolierschicht nutseitig umgibt. Dabei wird die Verbindung der Schutzschicht mit der Isolierschicht mittels des Imprägnierharzes üblicherweise dadurch erreicht, dass bei der Herstellung des Aktivteils die Isolierschicht und die Schutzschicht in einem Imprägnierprozess mit einem Harz getränkt werden.

Generell kann das Aktivteil dabei mehrere Leiter aufweisen, welche jeweils in einer der Nuten angeordnet sind.

Weiterhin wird die Aufgabe durch eine elektrische Maschine, insbesondere eine Hochspannungsmaschine, mit einem erfindungsgemäßen Aktivteil gelöst. Dabei kann die elektrische Maschine als dynamoelektrische Maschine, beispielsweise als Generator oder als Elektromotor, und das Aktivteil als Stator der Maschine ausgeführt werden. Denkbar ist dabei auch, das Aktivteil als Rotor der elektrischen Maschine auszuführen.

Bei einer vorteilhaften Ausgestaltung der Erfindung enthält der Beschleuniger ein Amin, ein Imidazol oder deren Verbindungen, ein Ammoniumsalz, ein Phosphoniumsalz, eine Lewissäure, eine Lewisbase, einen Bortrichlorid-Komplex oder einen Fluortrichlorid-Komplex.

Insbesondere wenn als Imprägnierharz ein Epoxidharz gewählt wird, stellt jeder der genannten Stoffe einen guten Beschleuniger dar, welcher während und nach dem Imprägnierprozess ein zuverlässiges Aushärten des Imprägnierharzes gewährleistet. Dabei können auch zwei oder mehr der oben genannten Stoffe zu einem in der Schutzschicht enthaltenen Beschleuniger kombiniert werden.

Bei einer weiteren vorteilhaften Ausgestaltung der Erfindung weist die Isolierschicht zumindest zwei Isolierlagen auf, wobei die äußerste Isolierlage als Feinglimmerfolienband oder eine geschachtelte Mischisolierung aus Feinglimmerfolienband und Feinglimmerglasband ausgeführt ist.

Generell weisen Feinglimmerfolienbänder gute elektrische Isolationseigenschaften auf, allerdings können sie folienseitig keinen bzw. nicht ausreichend Beschleuniger aufnehmen bzw. abgeben, um während eines Imprägnierprozesses mit einer Schutzschicht, welche selbst keinen Beschleuniger enthält, eine ausreichende Aushärtung des Imprägnierharzes zu ermöglichen. Da allerdings die Schutzschicht erfindungsgemäß den Beschleuniger enthält, kann somit auch eine Isolierlage Feinglimmerfolienband bzw. eine geschachtelte Mischisolierung aus Feinglimmerfolienband und Feinglimmerglasband die Isolierschicht nach außen zur Schutzschicht hin abschließen.

Somit ist durch die Verwendung einer beschleunigerhaltigen Schutzschicht auch bei einer Mischisolierung oder einer reinen Feinglimmerfolienisolierung eine gute Anbindung der Schutzschicht an die Isolierschicht, insbesondere auch im Folienbereich, gewährleistet. Dies ermöglicht, dass auch der Bereich der äußeren Isolierlage geschachtelt bewickelt werden kann.

Bei einer weiteren vorteilhaften Ausgestaltung der Erfindung weist die Schutzschicht zumindest zwei Schutzlagen auf. Bei einer mehrlagigen Schutzschicht, welche den Beschleuniger enthält, wird eine ausreichende Härtung des Imprägnierharzes zwischen den Schutzlagen sichergestellt. Gleichzeitig ist eine zuverlässige Anbindung der Schutzschicht an die Isolierschicht und an das Blechpaket gewährleistet.

Bei einer weiteren vorteilhaften Ausgestaltung der Erfindung weist der Leiter zumindest zwei Teilleiter auf. Dabei können die Teilleiter, beispielsweise beim Einsatz in Hochspannungsmaschinen, jeweils eine Teilleiterisolierung aufweisen. Ferner kann die Gesamtheit der Teilleiter als Roebel-Stab oder einer anderen Anordnung zur Reduktion von Verlusten bei einer Beaufschlagung des Leiters mit Wechselstrom- bzw. -spannung ausgeführt sein.

Bei einer weiteren vorteilhaften Ausgestaltung der Erfindung ist zwischen dem Leiter und der Isolierschicht eine Schicht zur Innenpotenzialsteuerung angeordnet.

Die Schicht zur Innenpotenzialsteuerung ist schwach elektrisch leitend und begrenzt lokale Feldstärkeüberhöhungen an den Kanten des Leiters durch eine Feldglättung, so dass eine frühzeitige Bildung von Treeing-Kanälen vermieden werden kann. Insbesondere wenn der Leiter aus Teilleitern besteht, wird weiterhin einer Spaltbildung zwischen den Teilleitern und der Isolierschicht vorgebeugt, wobei die Spaltbildung beispielsweise durch thermomechanische Beanspruchungen entstehen kann.

Beispielsweise kann die Schicht zur Innenpotenzialsteuerung vom innen angeordneten elektrischen Leiter nach außen zur Isolierschicht zunächst einen Grundwickel mit einem Glimmerband, anschließend einen Kontaktstreifen und schließlich ein Glimmschutzband aufweisen.

Dabei kann das beschleunigerhaltige Außenglimmschutzband ebenfalls als Bandmaterial für die Innenpotentialsteuerung Anwendung finden.

Im Folgenden wird die Erfindung anhand der in den Figuren dargestellten Ausführungsbeispiele näher beschrieben und erläutert. Es zeigen:
- FIG 1: einen Ausschnitt eines Ausführungsbeispiels des erfindungsgemäßen Aktivteils, und
- FIG 2: einen Ausschnitt eines weiteren Ausführungsbeispiels des erfindungsgemäßen Aktivteils.

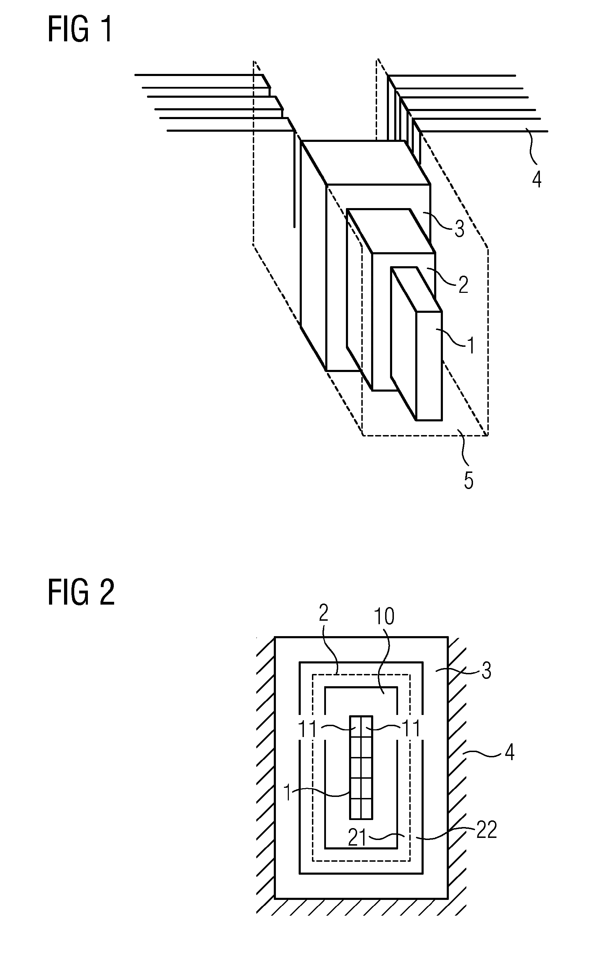

Figur 1 zeigt einen Ausschnitt eines Ausführungsbeispiels des erfindungsgemäßen Aktivteils. Das Aktivteil weist ein Blechpaket 4 auf, in welches Nuten 5 eingebracht sind. In einer der Nuten 5 ist ein elektrischer Leiter 1 angeordnet, der von einer Isolierschicht 2 umgeben ist. Die Isolierschicht 2 bewirkt eine elektrische Isolation des Leiters 1 vom Blechpaket 4 und wird insbesondere bei Hochspannungsmaschinen als Hauptisolierung bezeichnet. Um die Isolierschicht 2 ist eine Schutzschicht 3 angeordnet, welche einen Beschleuniger für ein Imprägnierharz enthält. Im Umfeld von Hochspannungsmaschinen ist die Schutzschicht 3 auch als Außenglimmschutz bekannt.

Während eines Imprägnierprozesses dringt das Imprägnierharz in die Schutzschicht 3 ein, wobei das Imprägnierharz dank des in der Schutzschicht 3 enthaltenen Beschleunigers im anschließenden Ofenprozess gut aushärtet. Dadurch wird eine gute Anbindung der Schutzschicht 3 sowohl an die Isolierschicht 2 als auch an das Blechpaket 4 gewährleistet. Gleichzeitig ermöglicht die beschleunigerhaltige Schutzschicht 3, Materialien für die Isolierschicht 2 zu verwenden, welche sehr gute Isoliereigenschaften aufweisen, aber lediglich eine unreichende Menge Beschleuniger aufnehmen bzw. abgeben können.

Figur 2 zeigt einen Ausschnitt eines weiteren Ausführungsbeispiels des erfindungsgemäßen Aktivteils. Gegenüber dem in Figur 1 dargestellten Aktivteil ergeben sich folgende Unterschiede. Der Leiter 1 weist nunmehr mehrere Teilleiter 11 auf, welche jeweils von einer Teilleiter-Isolierung umschlossen werden können und deren Gesamtheit beispielsweise als Roebel-Stab ausgeführt werden kann. Auch andere Anordnungen zur Reduktion von Verlusten bei einer Beaufschlagung des Leiters mit Wechselstrom- bzw. -spannung sind dabei denkbar.

An den Leiter 1 schließt sich in Richtung zum Blechpaket 4 eine Schicht 10 zur Innenpotenzialsteuerung an, welche üblicherweise schwach elektrisch leitend ist und lokale Feldstärkeüberhöhungen an den Kanten des Leiters 1 durch eine Feldglättung begrenzen. Beispielsweise kann die Schicht 10 zur Innenpotenzialsteuerung vom innen angeordneten elektrischen Leiter nach außen zur Isolierschicht zunächst einen Grundwickel mit einem Glimmerband, anschließend einen Kontaktstreifen und schließlich ein Glimmschutzband aufweisen.

Verglichen zum in Figur 1 dargestellten Aktivteil weist die Isolierschicht 2 nunmehr eine innere Isolierlage 21 und eine äußere Isolierlage 22 auf, so dass sie nunmehr zweilagig ausgeführt ist. Dabei kann die äußere Isolierlage 22 als Feinglimmerglasband ausgeführt sein, welches nur eine unzureichende Menge Beschleuniger aufnehmen bzw. abgeben kann. Ein ausreichend guter Härtevorgang im Zusammenhang mit dem Imprägnierprozess wird dennoch gewährleistet, da die Schutzschicht 2 den Beschleuniger enthält.

Weiterhin kann auch die Schutzschicht 3 mehrlagig ausgeführt sein und somit mehrere Schutzlagen aufweisen.

Zusammenfassend betrifft die Erfindung ein Aktivteil einer elektrischen Maschine mit einem Blechpaket mit eingebrachten Nuten, einem in einer der Nuten angeordneten elektrischen Leiter, einer Isolierschicht, welche den elektrischen Leiter zumindest teilweise umgibt und von dem Blechpaket elektrisch isoliert, einer Schutzschicht, welche die Isolierschicht zumindest teilweise umgibt, wobei die Schutzschicht mit der Isolierschicht und mit dem Blechpaket mittels eines Imprägnierharzes verbunden ist. Weiterhin betrifft die Erfindung eine elektrische Maschine mit einem derartigen Aktivteil. Um einen verbesserten Außenglimmschutz zur Verfügung zu stellen, der unabhängig von der Beschaffenheit der Hauptisolierung eine gute Anbindung an die Hauptisolierung und an das Blechpaket sicherstellt, wird vorgeschlagen, dass die Schutzschicht einen Beschleuniger für das Imprägnierharz enthält.

## Patentansprüche

1. Aktivteil einer elektrischen Maschine mit
- einem Blechpaket (4) mit eingebrachten Nuten (5),
- einem in einer der Nuten (5) angeordneten elektrischen Leiter (1),
- einer Isolierschicht (2), welche den elektrischen Leiter (1) zumindest teilweise umgibt und von dem Blechpaket (4) elektrisch isoliert,
- einer Schutzschicht (3), welche die Isolierschicht (2) zumindest teilweise umgibt,
wobei die Schutzschicht (3) mit der Isolierschicht (2) und mit dem Blechpaket (4) mittels eines Imprägnierharzes verbunden ist,
**dadurch gekennzeichnet, dass** die Schutzschicht (3) einen Beschleuniger für das Imprägnierharz enthält.

2. Aktivteil nach Anspruch 1,
wobei der Beschleuniger ein Amin, ein Imidazol oder deren Verbindungen, ein Ammoniumsalz, ein Phosphoniumsalz, eine Lewissäure, eine Lewisbase, einen Bortrichlorid-Komplex oder einen Fluortrichlorid-Komplex enthält.

3. Aktivteil nach einem der vorhergehenden Ansprüche,
wobei die Isolierschicht (2) zumindest zwei Isolierlagen (21, 22) aufweist und
wobei die äußerste Isolierlage (22) als Feinglimmerfolienband oder eine geschachtelte Mischisolierung aus Feinglimmerfolienband und Feinglimmerglasband ausgeführt ist.

4. Aktivteil nach einem der vorhergehenden Ansprüche,
wobei die Schutzschicht (3) zumindest zwei Schutzlagen aufweist.

5. Aktivteil nach einem der vorhergehenden Ansprüche,
wobei der Leiter (1) zumindest zwei Teilleiter (11) aufweist.

6. Aktivteil nach einem der vorhergehenden Ansprüche,
wobei zwischen dem Leiter (1) und der Isolierschicht (2) eine Schicht (10) zur Innenpotenzialsteuerung angeordnet ist.

7. Elektrische Maschine, insbesondere Hochspannungsmaschine, mit einem Aktivteil nach einem der vorhergehenden Ansprüche.

8. Elektrische Maschine nach Anspruch 7,
wobei die elektrische Maschine als dynamoelektrische Maschine und das Aktivteil als Stator ausgeführt ist.
